# EUROPÄISCHE PATENTSCHRIFT

(11) **EP 0 668 587 B1**
(45) Veröffentlichungstag und Bekanntmachung des Hinweises auf die Patenterteilung: **20.06.2001**
(21) Anmeldenummer: 95200322.6
(22) Anmeldetag: 10.02.1995
(51) Int. Cl.: G11B 15/60, G11B 15/61

(54) **Aufzeichnungs- und/oder Wiedergabegerät**
Record- and/or play apparatus
Appareil d'enregistrement et/ou de lecture

(30) Priorität: 18.02.1994 DE 4405154
(43) Veröffentlichungstag der Anmeldung: 23.08.1995
(73) Patentinhaber: Philips Corporate Intellectual Property GmbH, 52064 Aachen (DE); Koninklijke Philips Electronics N.V., 5621 BA Eindhoven (NL)
(72) Erfinder: Fell, Wolfgang, Dr.-Ing., D-20097 Hamburg (DE)
(74) Vertreter: Schmalz, Günther, Dipl.-Ing.

(56) Entgegenhaltungen:
- EP-A- 0 493 880
- DE-A- 3 127 340
- DE-A- 4 110 590
- FR-A- 2 373 853
- GB-A- 2 197 933
- US-A- 3 658 227
- US-A- 4 729 500
- US-A- 4 734 808

## Beschreibung

Die Erfindung bezieht sich auf ein Aufzeichnungs- und/oder Wiedergabegerät mit einer Umlenkrolle zur Führung und Umlenkung eines Magnetbandes, wobei die Umlenkrolle ein auf einer Achse dreh- und schwenkbar gelagertes Mantelteil und einen nahe der Achslagerstelle angeordneten Führungsflansch für das Magnetband aufweist, welches mit seiner Unterkante gegen den Führungsflansch gedrückt ist.

Derartige Umlenkrollen werden z.B. bei Magnetband-Aufzeichnungsgeräten für Fernsehzwecke benutzt. Diese Geräte besitzen einen mit einem rotierenden Kopfrad versehenen Zylinder, der von dem Magnetband schraubenförmig umschlungen wird. Die genannten Umlenkrollen dienen dabei zur Führung und Umlenkung des Magnetbandes. Für eine einwandfreie Bildqualität ist dabei eine exakte Führung des Magnetbandes durch diese Umlenkrollen erforderlich. Zur Erzielung einer einwandfreien Führung des Magnetbandes ist dabei in erster Linie die dem Zylinder unmittelbar vorangehende Führungsrolle verantwortlich. Für Zwecke der heute gebräuchlichen Dichtspeichertechnik orientieren sich alle Aufzeichnungen stets an einer festgelegten Bezugskante des Magnetbandes. Somit ist erforderlich, daß das Magnetband exakt in bezug auf eine Bandkante geführt wird.

Eine Umlenkrolle, bei welcher das Magnetband an einer Kante geführt wird, ist z.B. bei einem in der DE-B- 26 56 026 beschriebenen magnetischen Aufzeichnungs- und/oder Wiedergabegerät bekannt geworden. Diese bekannte Bauart zeigt eine mittels eines Radial-Kugellagers auf einer Achse gelagerte, schwenkbare Umlenkrolle. Dabei ist das Kugellager, bezogen auf die Breite des über die Umlenkrolle geführten Magnetbandes, außermittig angeordnet. Ferner ist der feststehende Führungsflansch in der Nähe des vom Kugellager weiter entfernten Endes der Umlenkrolle angeordnet. Bei der außermittigen Lagerung wird das Lagerspiel des Radialkugellagers derart ausgenutzt, daß die Achse des rotierenden Mantelteiles gegenüber der feststehenden, den Innenring des Radialkugellagers tragenden Achse geschwenkt wird. Somit kann bei kleinen Winkelschwankungen des anlaufenden Bandes der dieses Band berührende Teil des Mantelteiles diesen Schwankungen folgen. Es stellt sich ein Kräftegleichgewicht ein zwischen einer vom Magnetband auf den Führungsflansch ausgeübten Kraft einerseits und einer vom Führungsflansch auf die untere Bandkante ausgeübten Bandkantenführungskraft andererseits. Die Umlenkrolle richtet sich dabei nach den wirkenden Kräften aus. Die Bezugskante des Magnetbandes liegt somit infolge der durch die asymmetrische Lagerung der Umlenkrolle hervorgerufenen Driftkomponente ständig mit einer gewissen Kraft an dem feststehenden Führungsflansch an. Damit kann zwar eine korrekte Seitenführung des Magnetbandes erzielt werden, jedoch sind die möglichen übertragbaren Seitenführungskräfte durch das Bandmaterial begrenzt. Dünne Bänder müssen mit erheblich kleineren Seitenkräften geführt werden. Während eine derartige bekannte Bauweise bei bisher verwendeten relativ dicken Magnetbändern problemlos funktioniert, besteht bei immer dünner werdenden Magnetbändern die Gefahr, daß das Magnetband knittert und damit zerstört wird.

Aus EP 0 493 880 A2 sind Bandführungsrollen bekannt, bei welchen eine Beschädigung, ein Reißen oder ein Verknittern eines Bandes dadurch vermieden wird, daß ein Teil des Bandes über eine drehbar gelagerte Rolle und ein Teil des Bandes über einen nicht drehbaren Rollenkörper geführt ist. Die Seitenfläche des Rollenkörpers weist einen verjüngenden Verlauf auf mittels welchem eine Stellkraft auf das Band derart ausgeübt wird, daß Abweichungen in der Höhe des vorbeilaufenden Bandes reguliert werden. Dieses Dokument enthält die Merkmale des Oberbegriffs von Anspruch 1.

Der Erfindung liegt die Aufgabe zugrunde, das eingangs genannte, eine Umlenkrolle aufweisende Aufzeichnungs- und/oder Wiedergabegerät derart zu verbessern, daß auch bei Verwendung von sehr dünnen Magnetbändern unerwünschte Bandkantenbeschädigungen vermieden werden.

Diese Aufgabe wird erfindungsgemäß durch das in Anspruch 1 definierte Gerät gelöst.

Mit einer derartigen Ausbildung der beiden Mantelteile kann bewirkt werden, daß das im unteren Teil angeordnete, nicht drehbare, stationäre Mantelteil gegenüber der maßgebenden Fläche des rotierenden Mantelteiles vorsteht, so daß von diesem stationären Mantelteil eine zusätzliche Kraft auf das Magnetband ausgeübt wird. Im Betriebszustand herrscht ein Gleichgewicht der Kräfte bzw. der zugehörigen Drehmomente. Dies bedeutet, daß die vom Führungsflansch auf die untere Bandkante ausgeübte Kraft umso kleiner wird, je größer die vom stationären Mantelteil auf das Band ausgeübte Kraft ist. Damit ergibt sich die Möglichkeit, die vom Führungsflansch auf die Bandkante ausgeübte Kraft gezielt und bewußt einzustellen. Dies bedeutet, daß die vom Führungsflansch auf die untere Bandkante ausgeübte Kraft durch die Relativverstellung der beiden Mantelteile z.B. bei Verwendung von dünnen Magnetbändern gezielt vermindert werden kann. Die durch das vorstehende Mantelteil entstehende Kraft auf das Magnetband wirkt somit entlastend. Damit wird die Gefahr für eine Beschädigung des Magnetbandes vermindert bzw. ganz vermieden, da im Grenzfall die Kantenführungskraft sogar aufgehoben werden kann.

In Ausgestaltung der Erfindung ist das drehbare Mantelteil, bezogen auf die Breite des über die Umlenkrolle geführten Magnetbandes, außermittig angeordnet. Das drehbare Mantelteil kann z.B. auch leicht kegelig ausgebildet sein. Beide Maßnahmen bewirken auf einfache Weise, daß das Magnetband mit seiner Unterkante gegen den Führungsflansch gedrückt wird.

In weiterer Ausgestaltung der Erfindung ist das stationäre Mantelteil relativ zum drehbaren Mantelteil in Richtung auf das Magnetband verschiebbar ausgebildet. Bei einer derartigen Ausführung wird das stationäre Mantelteil in Richtung der Winkelhalbierenden soweit in Richtung auf das Magnetband vorgeschoben, bis eine gewünschte Verminderung der auf die Bandunterkante einwirkenden Bandführungskraft erreicht wird. Die Verstellung des stationären Mantelteiles erfolgt z.B. mit einer radial verstellbaren Stellschraube.

In der Zeichnung sind in den Figuren 1 bis 3 Ausführungsbeispiele des Gegenstandes gemäß der Erfindung schematisch dargestellt.
- Fig. 1: zeigt in einer geschnittenen Seitenansicht eine Umlenkrolle gemäß der Erfindung,
- Fig. 2: zeigt in drei schematischen Darstellungen eine Vorderansicht, eine Draufsicht und eine Seiten-ansicht einer von einem Magnetband umschlungenen Umlenkrolle, und
- Fig. 3: zeigt eine Draufsicht auf ein Magnetbandgerät.

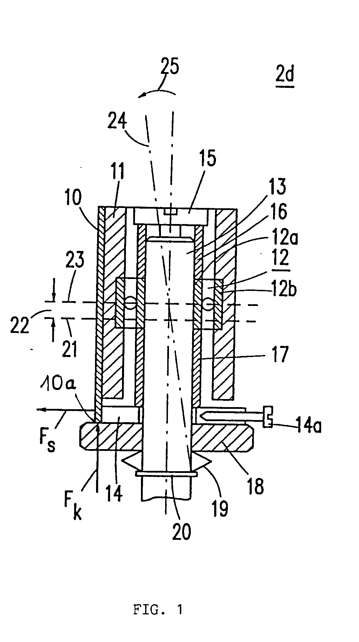

Fig. 1 zeigt eine Umlenkrolle für ein Magnetband 10 eines nicht dargestellten Magnetbandgerätes. Die Umlenkrolle besitzt ein zylinderförmiges erstes Mantelteil 11, das über ein einziges Kugellager 12 auf einer ortsfesten Welle 13 dreh- und schwenkbar gelagert ist. Ferner ist ein zweites, nicht drehbares, aber verschiebbares Mantelteil 14 vorgesehen, das von einer Höheneinstellschraube 15 über Abstandshülsen 16, 17 und einen Kugellagerinnenring 12a gegen einen Führungsflansch 18 gepreßt ist. Der Führungsflansch 18 ist über ein Federpaket 19 und einen Halteflansch 20 auf der Welle 13 befestigt. Als Führungsfläche für das Magnetband 10 dienen das drehbar auf der Welle gelagerte erste Mantelteil 11 und das über eine Stellschraube 14a verstellbare zweite Mantelteil 14. Die untere Kante 10a des Magnetbandes 10 berührt den Führungsflansch 18. Die Höheneinstellschraube 15 wird soweit angezogen, daß das scheibenförmige Mantelteil 14 durch Reibung zwischen dem Führungsflansch 18 und der Abstandshülse 17 festgeklemmt ist. Der Kugellagerinnenring 12a des Radialkugellagers 12 ist durch die beiden Hülsen 16, 17 gegen axiale Verschiebung gesichert. Der Außenring 12b des Radialkugellagers 12 ist mit dem Mantelteil 11 fest verbunden.

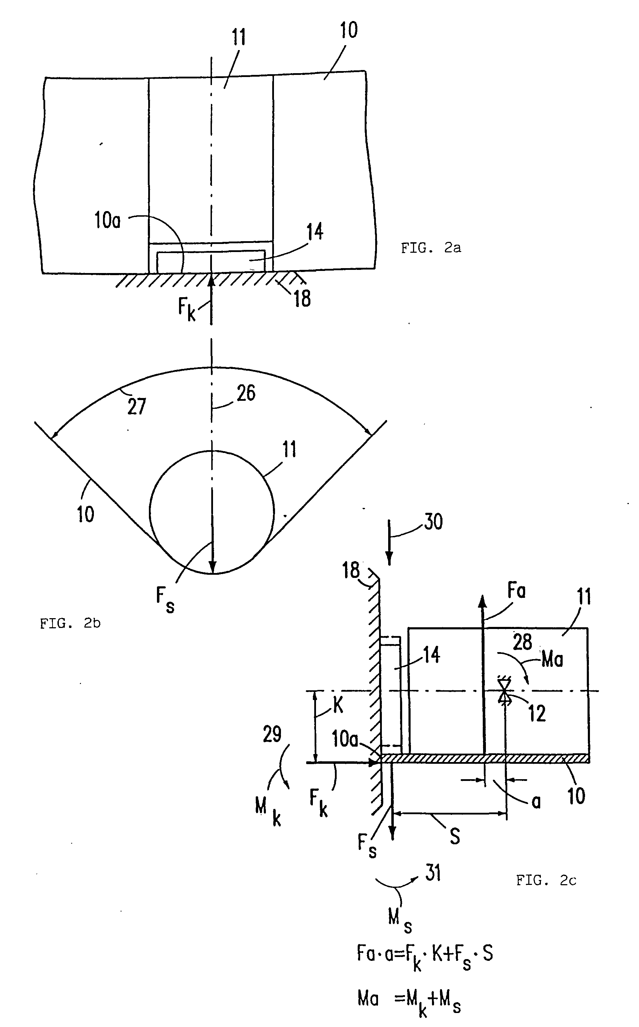

Eine durch die Mitte des Magnetbandes 10 gelegte Ebene 21 liegt um den Betrag 22 unterhalb der durch die Mitte des Kugellagers 12 gelegten Ebene 23. Hierdurch wird unter Ausnutzung des Lagerspiels des Radialkugellagers 12 bewirkt, daß die Achse 24 des drehbaren Mantelteiles 11 gegenüber der feststehenden Welle 13 in Richtung des Pfeiles 25 geschwenkt wird. Die dargestellte Auslenkung ist aus Übersichtsgründen stark vergrößert dargestellt. Damit wird erreicht, daß bei kleinen Winkelschwankungen des anlaufenden Bandes der dieses Band berührende Teil der Rolle diesen Schwankungen folgen kann. Dadurch, daß die Ebene 23 des Radialkugellagers 12 oberhalb der Ebene 21 des Magnetbandes 10 liegt, wird das Magnetband 10 mit seiner unteren Kante 10a stets gegen den Führungsflansch 18 gedrückt. Dadurch wird eine korrekte und zuverlässige Seitenführung des Magnetbandes 10 erzielt. Dabei entsteht zwischen der Unterkante 10a des Bandes 10 und dem Führungsflansch 18 eine mehr oder weniger große Reibung, die bei starken Magnetbändern nicht störend wirkt. Bei dünnen Magnetbändern kann dieser Effekt jedoch zu einer Verknitterung und zu einer unerwünschten Beschädigung des Magnetbandes führen. Um dies zu verhindern, ist das verschiebbare Mantelteil 14 vorgesehen. Dessen Wirkungsweise wird nachfolgend anhand der schematischen Bilder gemäß Fig. 2a - c erläutert.

Fig. 2a bis c zeigen die Umlenkrolle mit dem Magnetband 10 in einer Vorderansicht, in einer Draufsicht und in einer Seitenansicht. Die Verstellung des Mantelteiles 14 mittels der Schraube 14a erfolgt in Richtung der Winkelhalbierenden 26 des Umschlingungswinkels 27, mit dem das Magnetband 10 über die Umlenkrolle geführt wird. Im Betrieb wird das Band 10 mit einer Kraft gegen den Führungsflansch 18 gedrückt. Mit Fₖ ist als Reaktionskraft die Kantenführungskraft bezeichnet, die vom Führungsflansch 18 gegen die Bandkante 10a ausgeübt wird.

Gemäß Fig. 2c wird im Betrieb von dem Magnetband 10 als Resultierende eine Kraft Fₐ auf das drehbare Mantelteil 11 ausgeübt, die wegen der obengenannten Exzentrizität unterhalb der Lagerstelle des Radialkugellagers 12 angreift. Diese Kraft Fₐ erzeugt mit einem Hebelarm a ein Drehmoment Mₐ in Richtung 28. Wenn, wie dies in Fig. 2c gestrichelt dargestellt ist, das stationäre Mantelteil 14 nicht in Berührung mit dem Magnetband 10 ist, wirkt nur die Kraft Fₖ am Hebelarm k und erzeugt ein Drehmoment Mₖ in Richtung 29, das mit dem Drehmoment Mₐ im Gleichgewicht ist. Wenn nunmehr das Mantelteil 14 in Richtung 30 verschoben wird, erfolgt eine Berührung mit dem Magnetband 10, so daß eine zusätzliche Kraft Fₛ auf das Magnetband wirkt und mit dem Hebelarm s ein Drehmoment Mₛ in Richtung 31 erzeugt. Die Drehmomente Mₖ und Mₛ sind damit im Gleichgewicht mit dem Drehmoment Mₐ. Dadurch wird die von dem Führungsflansch 18 auf die Bandkante 10a einwirkende Kraft Fₖ vermindert, je nachdem, wie groß die von dem Mantelteil 14 ausgeübte Kraft Fₛ ist.

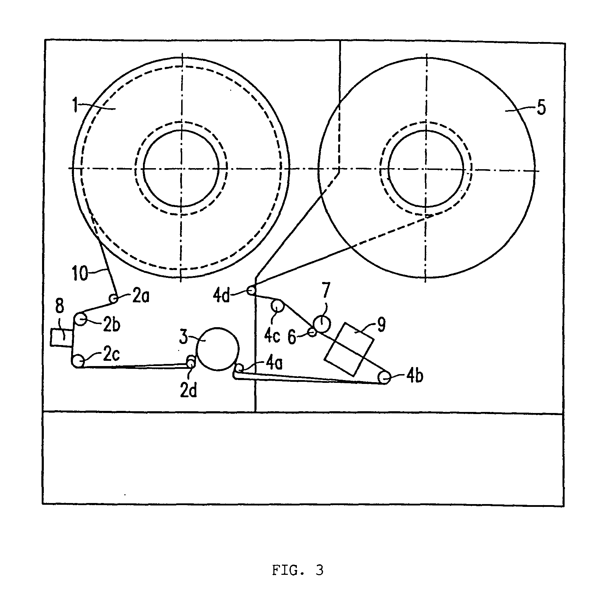

Fig. 3 zeigt ein Magnetbandgerät, bei dem das Magnetband 10 von einer Vorratsspule 1 über Umlenkrollen 2a bis 2d, über einen Zylinder 3 und über weitere Umlenkrollen 4a bis 4d zu einer Aufwickelspule 5 geführt wird. Der Zylinder 3 enthält als Abtasteinrichtung ein nicht dargestelltes, drehbar angeordnetes Kopfrad. Der Bandantrieb erfolgt über eine motorgetriebene Antriebsrolle 6, an die das Magnetband 10 mittels einer Anpreßrolle 7 angedrückt wird. Mit 8 ist ein Löschkopf und mit 9 eine Kopfeinheit bezeichnet, welche mehrere Köpfe für Aufzeichnung bzw. Wiedergabe der Toninformation sowie Löschköpfe enthält.

Um eine Führung des Magnetbandes 10 über den Zylinder 3 entlang einer Schraubenlinie zu ermöglichen, sind die Achsen der beiden Umlenkrollen 2d und 4a relativ zur Achse des Zylinders 3 und auch relativ zu den Achsen der übrigen Umlenkrollen geneigt. Die in den Fig. 1 bis 4 dargestellte Umlenkrolle 2d befindet sich in Einlaufrichtung vor dem Zylinder 3. Diese Umlenkrolle 2d ist derart ausgebildet, daß im Betrieb unter der Wirkung der vom Einlaufband und vom umgelenkten Ablaufband ausgeübten Kräfte der zylindrische Teil 11 gegen die feststehende Welle 13 verschwenkbar ist.

## Patentansprüche

1. Aufzeichnungs- und/oder Wiedergabegerät mit einer Umlenkrolle (2d) zur Führung und Umlenkung eines Magnetbandes, wobei die Umlenkrolle (2d) ein auf einer Achse (13) dreh- und schwenkbar gelagertes Mantelteil (11) und einen nahe der Achslagerstelle angeordneten Führungsflansch (18) für das Magnetband (10) aufweist, und zwischen dem drehbaren Mantelteil (11) und dem Führungsflansch (18) ein stationäres Mantelteil (14) angeordnet ist,
dadurch gekennzeichnet,
a) daß das Magnetbandband (10) mit seiner Unterkante (10a) gegen den Führungsflansch (18) gedrückt wird, und
b) daß das stationäre Mantelteil (14) in Richtung der Winkelhalbierenden (26) des Magnetband-Umschlingungswinkels (27) verstellbar und in einer jeweiligen gewünschten Position festlegbar ausgebildet ist, und
c) daß das stationäre Mantelteil (14) relativ zum drehbaren Mantelteil (11) in Richtung auf das Magnetband (10) verschiebbar ausgebildet ist.

2. Gerät nach Anspruch 1 oder 2,
dadurch gekennzeichnet,
daß das stationäre Mantelteil (14) eine radial verstellbare Stellschraube (14a) aufweist.

3. Gerät nach einem der Ansprüche 1 bis 3,
dadurch gekennzeichnet,
daß das stationäre Mantelteil (14) scheiben- oder stiftförmig ausgebildet ist.

4. Gerät nach einem der Ansprüche 1 bis 4,
dadurch gekennzeichnet,
daß das drehbare Mantelteil (11) über ein Radial-Kugellager (12) auf der Achse (13) gelagert ist,
daß die Achse (13) an ihrem freien Ende eine Höheneinstellschraube (15) aufweist und daß das stationäre Mantelteil (14) von dieser Schraube (15) über den Kugellager-Innenring (12a) und über beidseitig davon angeordnete hülsenförmige Abstandsstücke (16, 17) gegen den Führungsflansch (18) gepreßt ist.

5. Gerät nach einem der Ansprüche 1 bis 5,
dadurch gekennzeichnet,
daß das drehbare Mantelteil (11) leicht kegelig ausgebildet ist.

## Revendications

1. Appareil d'enregistrement et/ou de lecture avec une poulie de renvoi (2d) pour le guidage et le renvoi d'une bande magnétique, la poulie de renvoi (2d) présentant une partie d'enveloppe (11) logée à rotation et pivotement sur un axe (13) et une bride de guidage (18) pour la bande magnétique (10) disposée à proximité de la position du palier d'axe et une partie d'enveloppe stationnaire (14) entre la partie d'enveloppe (11) à rotation et la bride de guidage (18), caractérisé en ce
a) que la bande magnétique (10) est pressée par son bord inférieur (10a) contre la bride de guidage (18) et
b) que la partie d'enveloppe stationnaire (14) est conçue dans la direction de la bissectrice (26) de l'angle de contact d'enroulement de la bande magnétique (27) et peut être fixée dans une position souhaitée respective et
c) que la partie d'enveloppe stationnaire (14) est conçue à coulissement par rapport à la partie rotative de l'enveloppe (11) dans la direction de la bande magnétique (10).

2. Appareil selon l'une des revendications 1 ou 2,
caractérisé en ce
que la partie stationnaire de l'enveloppe (14) présente une vis de réglage (14a) réglable radialement.

3. Appareil selon l'une des revendications 1 à 3,
caractérisé en ce
que la partie stationnaire de l'enveloppe (14) est conçue en forme de disque ou de broche.

4. Appareil selon l'une des revendications 1 à 4,
caractérisé en ce
que la partie rotative de l'enveloppe (11) est logée par l'intermédiaire d'un roulement à billes radial (12) sur l'axe (13),
que l'axe (13) présente sur son extrémité libre une vis de réglage de la hauteur (15) et que la partie stationnaire de l'enveloppe (14) est pressée par cette vis (15) par l'intermédiaire de la bague interne du roulement à bille (12a) et par l'intermédiaire des pièces d'écartement (16, 17) en forme de douilles disposées de part et d'autre de celles-ci contre la bride de guidage (18).

5. Appareil selon l'une des revendications 1 à 5,
caractérisé en ce que la partie rotative de l'enveloppe (11) est de conception légèrement conique.

## Claims

1. A recording and/or reproducing apparatus having a guide roller (2d) for guiding and diverting a magnetic tape, the guide roller (2d) having a roller member (11), which is rotatably and pivotably mounted on a shaft (13), and a guide flange (18) for the magnetic tape (10), which guide flange is disposed near the shaft bearing location, and a stationary roller member (14) interposed between the rotatable roller member (11) and the guide flange (18),
characterized in that
a) the lower edge (10a) of the magnetic tape (10) being pressed against the guide flange (18), and
b) the stationary roller member (14) is constructed so as to be movable in the direction of the bisector (26) of the wrapping angle (27) of the magnetic tape and so as to be fixable in any desired position, and
c) the stationary roller member (14) is constructed so as to be movable relative to the rotatable roller member (11) in a direction towards the magnetic tape (10).

2. An apparatus as claimed in Claim 1,
characterized in that
the stationary roller member (14) has a radially adjustable adjustment screw (14a).

3. An apparatus as claimed in any one of the Claims 1 to 3,
characterized in that
the stationary roller member (14) is disc-shaped or pin-shaped.

4. An apparatus as claimed in any one of the Claims 1 to 4,
characterized in that
the rotatable roller member (11) is mounted on the shaft (13) via a radial ball-bearing (12), the shaft (13) has a height adjustment screw (15) at its free end, and
the stationary roller member (14) is pressed against the guide flange (18) by this screw (15) via the ball-bearing inner race (12a) and via sleeve-shaped spacers (16, 17) provided at opposite sides of said inner race.

5. An apparatus as claimed in any one of the Claims 1 to 5,
characterized in that
the rotatable roller member (11) is slightly conical.
